Europäisches Patentamt

**European Patent Office**

**Office européen des brevets**

(19)

(11) Numéro de publication: **0 218 509**
A1

# DEMANDE DE BREVET EUROPEEN

(12)

(21) Numéro de dépôt: **86402034.2**

(22) Date de dépôt: **17.09.86**

(51) Int. Cl.⁴: **B 62 D 55/112**

(30) Priorité: **19.09.85 FR 8513935**

(43) Date de publication de la demande: **15.04.87**
**Bulletin 87/16**

(84) Etats contractants désignés: **DE FR GB IT**

(71) Demandeur: **LUCAS FRANCE S.A., 11, rue Lord Byron, F-75008 Paris (FR)**

(72) Inventeur: **Chauveau, Jean-Marc, 50, rue du Docteur Darin, F-92370 Chaville (FR)**
Inventeur: **Chambon, Claude André, 6, rue du Houssay, 91460 Marcoussis (FR)**

(74) Mandataire: **Martin, Jean-Jacques, Cabinet REGIMBEAU 26, Avenue Kléber, F-75116 Paris (FR)**

(54) **Organe de suspension pour véhicule, avec moyens d'amortissement.**

(57)  La présente invention concerne un organe de suspension, pour véhicule, comportant des moyens d'amortissement.

Dans une suspension comportant un bras (29) monté oscillant par rapport à un support (4), et des moyens définissant élastiquement une position angulaire d'équilibre du bras (29) à la rotation par rapport au support (4), on prévoit des moyens d'amortissement des mouvements de rotation du bras (29) sous une forme comportant deux organes complémentaires de freinage par friction (82, 83), solidaires respectivement du bras (29) et du support (4) à l'encontre d'une rotation, des moyens de mise en contact mutuel, sous pression, de ces organes de freinage (82, 83), et des moyens d'asservissement de la pression de mise en contact mutuel de ces organes (82, 83) au moins à la vitesse de rotation du bras (29) par rapport au support (4).

On peut ainsi aisément donner à la courbe d'amortissement toute forme désirée, et notamment assurer une contance de l'effort d'amortissement à partir d'un seuil déterminé de vitesse de rotation du bras par rapport au support; on résout également beaucoup plus facilement les problèmes d'échauffement liés à l'amortissement.

ORGANE DE SUSPENSION POUR VEHICULE, AVEC MOYENS D'AMORTISSEMENT

La présente invention concerne un organe de suspension pour véhicule, muni de moyens d'amortissement .

Plus précisément, la présente invention concerne un organe de suspension du type comportant :

- un support susceptible d'être solidarisé avec une ossature du véhicule,

- un bras longitudinal,

- des moyens de liaison d'un organe de roulement avec le bras, définissant un premier axe transversal de rotation de l'organe de roulement par rapport au bras,

- des premier moyens de liaison du bras avec le support, définissant un deuxième axe transversal de rotation du bras par rapport au support, le deuxième axe étant parallèle au premier axe et décalé longitudinalement par rapport à celui-ci,

- des seconds moyens de liaison du bras avec le support, définissant une position angulaire d'équilibre du bras à la rotation autour du deuxième axe par rapport au support et autorisant élastiquement des mouvements de rotation du bras autour du deuxième axe par rapport au support dans deux sens inverses à partir de ladite position angulaire d'équilibre,

- des moyens d'amortissement desdits mouvements de rotation du bras.

Dans les suspensions de ce type actuellement connues, les moyens d'amortissement sont de type hydraulique et mettent en oeuvre deux chambres de fluide hydraulique qui sont placées à l'intérieur du bras et dont les volumes varient concomitamment , inversement l'un de l'autre, lorsque le bras pivote autour du deuxième axe par rapport au support ; les deux chambres sont reliées par des moyens définissant un étranglement, lesquels autorisent un passage de fluide d'une chambre à l'autre, suffisamment lentement pour amortir la rotation du bras.

Naturellement, la circulation du fluide hydraulique notamment à travers des moyens d'étranglement produit un échauffement du fluide d'autant plus important que la suspension est sollicitée, c'est-à-dire d'autant plus important que le bras accomplit des mouvements de rotation rapides et fréquents par rapport au support ; cet échauffement impose la prévision de moyens de refroidissement du fluide hydraulique, soit sous forme intégrée au bras, ce qui conduit à augmenter considérablement l'encombrement, la masse et l'inertie de ce dernier et nuit de ce fait à la qualité de la suspension, soit sous une forme disjointe du bras, ce qui oblige à prévoir des conduits souples de liaison entre le bras et les moyens de refroidissement du fluide hydraulique, lesquels conduits de liaison sont particulièrement vulnérables et représentent un inconvénient d'autant plus sensible que les suspensions du type indiqué en préambule équipent généralement des engins civils ou militaires destinés à évoluer sur des terrains particulièrement difficiles, sur lesquels les risques d'endommagement de tels conduits sont importants.

En outre, il apparaît que de tels moyens d'amortissement par circulation de fluide hydraulique à travers des moyens d'étranglement ne peuvent supporter des sollicitations rapides, à moins d'une structure complexe et coûteuse.

Plus précisément, on considère généralement que les moyens d'amortissement sont satisfaisants lorsqu'ils opposent un effort (ou un moment) d'amortissement :

- approximativement proportionnel à la vitesse de déplacement vertical de l'organe de roulement par rapport au véhicule (ou à la vitesse de rotation du bras par rapport au support) tant que cette vitesse reste inférieure à un seuil prédéterminé,

- approximativement constant dès lors que cette vitesse dépasse ce seuil prédéterminé.

Or, les moyens d'amortissement par fluide hydraulique prévus jusqu'à ce jour dans les suspensions à bras oscillant ne répondent à ce critère que jusqu'à un deuxième seuil de vitesse de déplacement vertical de l'organe de roulement par rapport au véhicule ; dès lors que ce deuxième seuil est dépassé, l'effort ou moment d'amortissement recommence à croître avec la vitesse de déplacement vertical de l'organe de roulement par rapport au véhicule, et peut aller jusqu'à atteindre des valeurs propres à provoquer la détérioration, voire même la destruction, du circuit hydraulique et du fluide hydraulique constituant les moyens d'amortissement.

Pour tenter de remédier à ces inconvénients, on a proposé, dans le brevet aux U.S.A. US-A-4 447 073 et dans la demande de brevet européen correspondante EP-A-0 090 154, de réaliser les moyens d'amortissement d'une suspension du type indiqué plus haut sous une forme comportant :

- deux organes complémentaires de freinage par friction,

- des moyens de solidarisation desdits organes à l'encontre d'une rotation autour du deuxième axe respectivement par rapport au bras et par rapport au support,

- des moyens de mise en contact mutuel, sous pression, des premier et second organes,

- des moyens d'asservissement de la pression de mise en contact mutuel des premier et second organes au moins à la vitesse de rotation du bras autour du deuxième axe par rapport au support dans un seul sens, dit "premier sens".

4

Ces moyens d'asservissement sont en pratique constitués par un piston de pompage à simple effet coopérant avec une came pour alternativement aspirer du fluide hydraulique dans un réservoir et le refouler vers des moyens formant vérin hydraulique et constituant les moyens de mise en contact mutuel, sous pression, des premier et second organes complémentaires de freinage, au fur et à mesure que le bras tourne de telle sorte que :

- lors de la rotation du bras dans ledit premier sens, correspondant à une phase de refoulement, la valeur de la pression de mise en contact mutuel des organes complémentaires de freinage, c'est-à-dire l'effort d'amortissement ou le moment de cet effort par rapport au deuxième axe, croisse d'un minimum à un maximum puis décroisse selon une loi déterminée,

- lors de la rotation du bras dans le deuxième sens, correspondant à une phase d'aspiration, la valeur de cette pression, de cet effort d'amortissement ou de ce moment d'amortissement, reste sensiblement à son minimum précité.

Certes, le fluide hydraulique ne joue alors plus de rôle dans l'amortissement proprement dit, les phénomènes d'échauffement liés à l'amortissement apparaissant alors au niveau des organes complémentaires de freinage par friction moins vulnérables et plus faciles à refroidir, et la valeur de l'effort ou du moment d'amortissement reste alors limitée, mais d'une part l'évolution de cet effort ou de ce moment et d'autre part la structure des moyens d'amortissement, indissociablement liées, préconisées dans les deux documents précités ne peuvent être considérées comme pleinement satisfaisantes puisque, en particulier, on ne peut pas influer sur l'amortissement lors de la rotation du bras dans le deuxième sens.

Le but de la présente invention est de remédier à ces inconvénients et, à cet effet, la présente invention propose une suspension du type comportant, comme il est connu en soi du fait de l'existence des deux documents précités :

    - un support susceptible d'être solidarisé avec une ossature du véhicule,

    - un bras longitudinal,

    - des moyens de liaison d'un organe de roulement avec le bras, définissant un premier axe transversal de rotation de l'organe de roulement par rapport au bras,

    - des premiers moyens de liaison du bras avec le support, définissant un deuxième axe transversal de rotation du bras par rapport au support, le deuxième axe étant parallèle au premier axe et décalé longitudinalement par rapport à celui-ci,

    - des seconds moyens de liaison du bras avec le support, définissant une position angulaire d'équilibre du bras à la rotation autour du deuxième axe par rapport au support et autorisant élastiquement des mouvements de rotation du bras autour du deuxième axe par rapport au support dans deux sens inverses à partir de ladite position angulaire d'équilibre,

    - deux organes complémentaires de freinage par friction,

    - des moyens de solidarisation desdits organes à l'encontre d'une rotation autour du deuxième axe respectivement par rapport au bras et par rapport au support,

    - des moyens de mise en contact mutuel, sous pression, des premier et second organes,

    - des moyens d'asservissement de la pression de mise en contact mutuel des premier et second organes au moins à la vitesse de rotation du bras autour du deuxième axe par rapport au support dans un premier sens,

caractérisée en ce qu'elle comporte en outre des moyens d'asservissement de la pression de mise en contact mutuel des premier et second organes au moins à la vitesse de rotation du bras autour du deuxième axe par rapport au support dans un deuxième sens opposé au premier sens.

En asservissant ainsi la pression de mise en contact mutuel des organes complémentaires de freinage, c'est-à-dire l'effort d'amortissement, à la vitesse de rotation du bras par rapport au support dans un sens ou dans l'autre, on peut donner toute forme recherchée à la courbe d'amortissement, c'est-à-dire à la courbe de l'effort d'amortissement ou du moment d'amortissement en fonction de la vitesse de déplacement vertical de l'organe de roulement par rapport au véhicule ; plus particulièrement, on peut obtenir que l'effort ou moment d'amortissement soit constant à partir d'une valeur donnée de vitesse de déplacement vertical de l'organe de roulement après avoir crû avec cette vitesse, que le déplacement s'effectue dans un sens ou dans l'autre.

Avec la même souplesse de choix de la courbe d'amortissement correspondante, on peut prévoir d'asservir ladite pression également à l'amplitude de rotation du bras autour du deuxième axe par rapport au support dans le premier et/ou le deuxième sens, grâce à des moyens qui peuvent avantageusement être constitués par lesdits moyens d'asservissement de cette pression à la vitesse de rotation du bras autour du deuxième axe par rapport au support dans le premier et/ou le deuxième sens.

En outre, si du fluide hydraulique peut être éventuellement utilisé comme moyen d'asservissement de la pression de mise en contact mutuel des organes complémentaires de freinage par friction à la vitesse de rotation du bras par rapport au support, ce fluide hydraulique ne joue aucun rôle dans l'amortissement proprement dit, ce qui permet d'éviter les problèmes notamment d'échauffement liés à l'utilisation habituelle de fluide hydraulique comme moyen d'amortissement.

De façon générale, les moyens d'asservissement de la pression de mise en contact mutuel des premier et second organes de freinage peuvent comporter :

- des moyens de captation de la vitesse de rotation et, éventuellement, de la position angulaire du bras par rapport au support respectivement dans le premier sens ou le deuxième sens, pour délivrer respectivement un premier signal ou un deuxième signal de valeur représentative de cette vitesse et, éventuellement, de cette position angulaire,

- des moyens de pilotage des moyens de mise en contact mutuel des premier et second organes en fonction de la valeur dudit premier ou deuxième signal, pour moduler la valeur de la pression de mise en contact mutuel des premier et second organes en fonction de la valeur dudit premier ou deuxième signal.

Avantageusement, des moyens agissant notamment par filtration dudit premier ou deuxième signal sont prévus pour limiter supérieurement ladite pression de mise en contact ainsi que pour la rendre insensible à des pivotements lents, ou de faible amplitude, ou de haute fréquence, du bras par rapport au support.

Les moyens de captation peuvent être de type électro-mécanique ou électromagnétique, ou encore opto-électronique, auquel cas ledit signal est électrique et les moyens de pilotage de type électronique ou électro-hydraulique ou électro-mécanique ; cependant, on peut également utiliser des moyens de captation et des moyens de pilotage de type mécano-hydraulique, ledit signal étant alors de type hydraulique.

Ainsi, par exemple, selon un mode de mise en oeuvre de la présente invention, les moyens d'asservissement de la pression de mise en contact mutuel des organes complémentaires de freinage comportent une came solidaire de l'un des éléments mutuellement mobiles que constituent respectivement le support et le bras, et des pistons de pompage immobilisés par rapport à l'autre de ces éléments, à l'encontre d'une rotation autour de l'axe de rotation du bras par rapport au support, lesquels pistons sont mus par la came lors de la rotation du bras par rapport au support et délivrent ainsi en fonction de la vitesse, et éventuellement de l'angle de rotation du bras par rapport au support, un débit de fluide hydraulique utilisé pour assurer la mise en contact mutuel, sous pression, des organes complémentaires de freinage ; à cet effet, on prévoit, en dérivation sur le circuit de liaison entre les pistons de pompage et les moyens de mise en contact mutuel des organes complémentaires de freinage, un étranglement conduisant à un réservoir de fluide hydraulique, cet étranglement autorisant un débit de fuite calibré, engendrant une perte de charge déterminant elle-même la pression dans ledit circuit de liaison ; sous une structure compacte et facile à réaliser, on peut ainsi commander de façon précise la pression d'application mutuelle des organes de freinage, en fonction de la vitesse et éventuellement de l'amplitude du mouvement du bras par rapport au support ; on peut facilement assurer une constance de cette pression, c'est-à-dire de l'effort d'amortissement, lorsque la vitesse de rotation du bras par rapport au support dépasse un seuil prédéterminé en prévoyant, en dérivation sur le circuit hydraulique joignant les pistons de pompage aux moyens de mise en contact mutuel des organes complémentaires de freinage, un clapet de surpression autorisant une dérivation d'une partie du fluide hydraulique vers un réservoir dès lors que la pression dans le circuit excède un seuil prédéterminé, lequel détermine alors l'effort d'amortissement maximal ; l'étranglement précité constitue en outre un filtre tel que des pivotements lents, ou de faible amplitude, ou de haute fréquence, du bras autour du support n'aient aucune influence sur la pression avec laquelle les organes de freinage sont appliqués l'un contre l'autre, c'est-à-dire sur l'effort d'amortissement ; l'effet de laminage du fluide hydraulique dans de tels moyens d'étranglement n'est en aucune façon comparable, notamment quant à ses conséquences d'élévation de température, à l'effet de laminage utilisé pour réaliser l'amortissement dans des suspensions mettant en oeuvre des moyens hydrauliques d'amortissement.

Lorsque les moyens d'amortissement sont du type préconisé par la présente invention, la source d'échauffement est constituée pratiquement exclusivement par les organes complémentaires de freinage par friction, en contact mutuel, que l'on peut avantageusement refroidir en établissant dans leur entourage une circulation d'un fluide hydraulique qui est brassé lors des mouvements de rotation du bras par rapport au support et qui, avantageusement, constitue une réserve dans laquelle les pistons de pompage puisent lors desdits mouvements.

D'autres caractéristiques et avantages de l'invention ressortiront à la description ci-dessous, relative à deux modes de mise en oeuvre non limitatifs, ainsi que des dessins annexés qui font partie intégrante de la description.

- La figure 1 montre une vue en perspective d'un organe de suspension réalisé conformément à la présente invention, dans un état d'équilibre statique alors que cet organe est monté sur un véhicule reposant sur un plan horizontal.

- La figure 2 montre une vue de cet organe en coupe partielle par un plan longitudinal, repéré en I-I à la figure 3, dans un état d'équilibre dynamique.

- La figure 3 montre une vue de l'organe de suspension en coupe par deux demi-plans repérés en III-III à la figure 2, dans le cas de moyens d'amortissement mettant en oeuvre des moyens de captation et des moyens de pilotage de type mécano-hydraulique.

- La figure 4 montre une vue de l'organe de suspension à l'état d'équilibre statique en coupe partielle par un plan repéré en IV-IV à la figure 3, lequel plan est parallèle au plan repéré en I-I ; la figure 4 illustre en outre schématiquement un circuit hydraulique formant partie des moyens d'amortissement dont est muni l'organe de suspension illustré à la figure 3.

- La figure 5 illustre schématiquement, une variante de réalisation des moyens d'amortissement, mettant en oeuvre des moyens de captation de type électro-mécanique et des moyens de pilotage de types électronique et électro-hydraulique.

- La figure 6 montre, à titre d'exemple, un diagramme d'évolution possible du moment d'amortissement en fonction de la vitesse de rotation du bras par rapport au support dans le cas de la variante de réalisation de la figure 5.

- La figure 7 montre, à titre d'exemple, un diagramme d'évolution possible du moment d'amortissement en fonction de l'amplitude de rotation du bras par rapport au support dans ce même cas, et plus précisément en fonction de la position angulaire du bras par rapport au support.

- La figure 8 montre une combinaison partielle des diagrammes des figures 6 et 7.

L'organe de suspension selon l'invention 1 est illustré dans des positions d'équilibre qu'il est susceptible d'occuper alors qu'il est monté sur un véhicule dont on a schématisé en 2 une ossature, et que ce véhicule repose sur un plan horizontal par l'intermédiaire d'un organe de roulement schématisé en 3, tel qu'une roue ou un galet de chenille, suivant le type de véhicule considéré.

C'est en référence à ces positions et à ces états d'équilibre que l'organe 1 sera décrit, étant bien entendu que toute notion d'horizontalité, de verticalité, de niveau, de sens n'aura aucun caractère limitatif, et devra être interprétée comme une simple indication de positionnement relatif des différents éléments de l'organe de suspension 1.

En vue de son montage sur l'ossature du véhicule, l'organe de suspension 1 qui a été illustré comporte un support 4 se présentant sous la forme d'une plaque verticale 6 qui peut être solidarisée, par exemple par boulonnage 5, avec l'ossature du véhicule et qui porte elle-même de façon solidaire, par exemple d'une seule pièce avec elle, un arbre 7 présentant une direction moyenne 8 horizontale, perpendiculaire à la plaque 4 ; lorsque le support 4 est solidarisé avec l'ossature 2 du véhicule, l'arbre 7 est en saillie à l'extérieur de celui-ci.

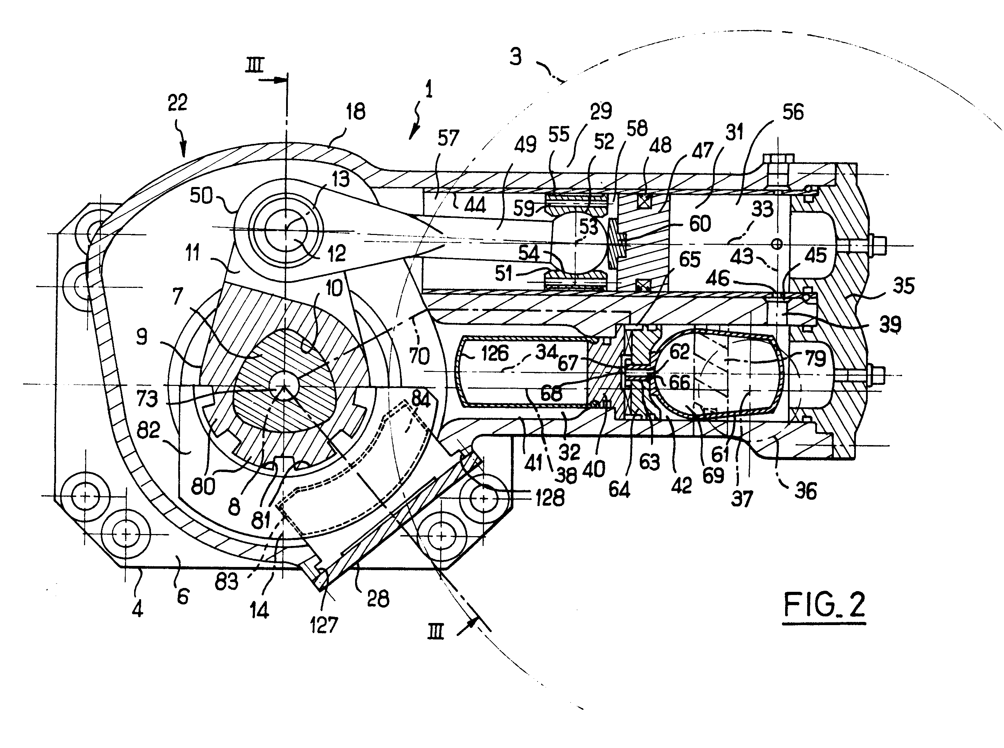

L'arbre 7 porte lui-même de façon solidaire, notamment à l'encontre d'une rotation autour d'un axe défini par sa direction moyenne 8, une manivelle 9 qui coopère à cet effet avec l'arbre 7 par complémentarité de formes ; par exemple, la manivelle 9 présente un alésage 10 par lequel elle s'emboîte sur l'arbre 7 et, transversalement par rapport à l'axe 8, l'alésage 10 et l'arbre 7 présentent des sections respectives polygonales, complémentaires, comme le montre la figure 2 ;

toute autre forme de solidarisation mutuelle de la manivelle 9 et de l'arbre 7 notamment à l'encontre d'une rotation relative autour de l'axe 8 pourrait être utilisée  sans que l'on sorte pour autant du cadre de la présente invention ; par exemple, on pourrait utiliser à cet effet un clavetage traditionnel, ou une coopération de l'alésage 10 et de l'arbre 7 par des cannelures complémentaires.

La manivelle 9 forme d'une part, au-dessus de l'arbre 7, une chape 11 portant de façon solidaire un tourillon 12 d'axe 13 situé parallèlement à l'axe 8, au-dessus de celui-ci et dans un même plan vertical 14 que  celui-ci ; cet axe 13 est comme l'axe 8 fixe par rapport au support 4 ; d'autre part, respectivement de part et d'autre de la chape 11 selon une direction parallèle à l'axe 8, la manivelle 9 définit de façon solidaire deux manchons 20 et 21 situés respectivement entre la chape 11 et la plaque 6, et à l'opposé de la plaque 6 par rapport à la chape 11 ; chacun des manchons 20 et 21 porte de façon solidaire la cage intérieure d'un roulement de butée respectif 16, 17 présentant par ailleurs une cage extérieure solidaire respectivement d'un boîtier de carter 18 ou d'un flasque de carter 19, l'un et l'autre annulaires et mutuellement solidaires, pour assurer le guidage du boîtier de carter 18 et du flasque de carter 19 à la rotation autour de l'axe 8 par rapport à la manivelle 9 et à l'arbre 7 sans possibilité de translation relative parallèlement à l'axe 8 ; à cet effet, en outre, les cages intérieures des roulements 16 et 17 sont emprisonnées respectivement entre la plaque 6 et la chape 4, et entre la chape 11 et une plaque de butée 93 rapportée de façon solidaire sur l'organe 7, par exemple par boulonnage 92, à l'opposé du raccordement de l'arbre 7 avec la plaque 6.

Le boîtier de carter 18 est étanche et enveloppe la manivelle 9 du côté de la plaque 6 du support 4 et dans le sens d'un éloignement radial par rapport à l'axe 8 ; autour  du roulement 16 et du manchon 20, le boîtier de carter 18 présente en saillie vers la plaque 6 une couronne 23 annulaire de révolution autour de l'axe 8, laquelle couronne 23 est engagée, avec possibilité de rotation relative autour de l'axe 8, dans une gorge complémentaire 24 aménagée dans la plaque 6 ; des garnitures d'étanchéité 25, 26 dont le choix et la position sont aisément déterminables par un homme du métier assurent une étanchéité entre la plaque 6, elle-même étanche, et la couronne 23 également étanche.

Le flasque 19, également étanche, est solidarisé de façon étanche avec le boîtier 18 et couvre la manivelle 9 à l'opposé du boîtier 18 ; il présente un orifice de révolution autour de l'axe 8, obturé de façon étanche par un couvercle rapporté 27, en forme générale de disque perpendiculaire à l'axe 8 ; de même , un orifice du boîtier 18 est obturé de façon étanche par un couvercle rapporté 28, si bien que le support 4, le boîtier de carter 18, le flasque de carter 19, le couvercle 27, le couvercle 28 définissent ensemble un carter étanche 22 enfermant notamment la manivelle 9, le tourillon 12 et les deux roulements 16 et 17.

Comme il apparaitra plus loin, le carter 22 contient un fluide hydraulique sensiblement incompressible, en pratique une huile, qui emplit au maximum ce carter 22 pouvant contenir par ailleurs de l'air.

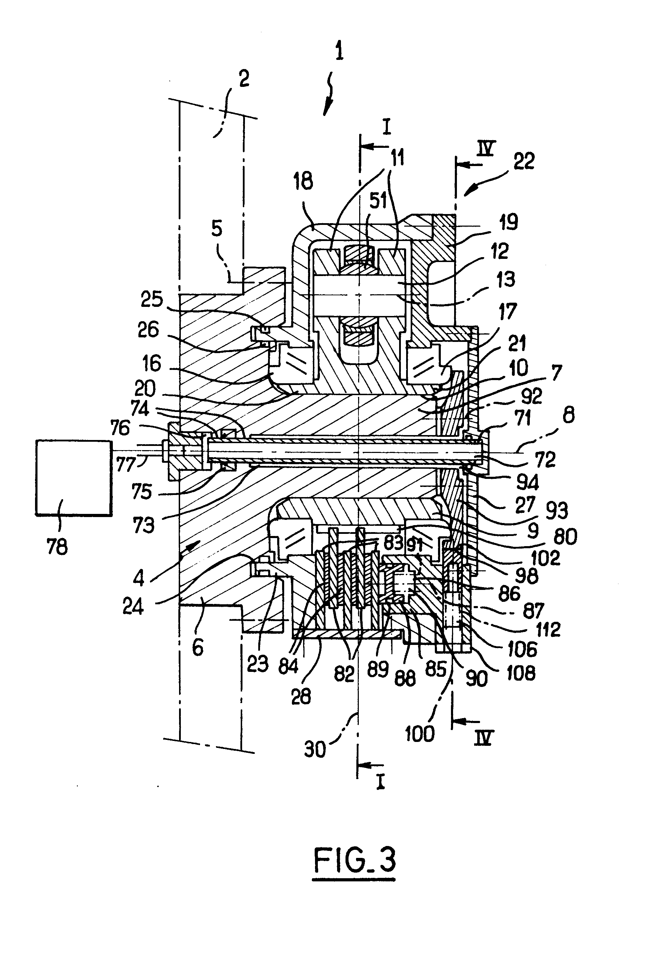

Le boîtier 18 porte de façon solidaire, de préférence en une seule pièce, un bras longitudinal creux 29, en saillie, par rapport au carter 22, suivant un plan moyen 30 perpendiculaire à l'axe 8 et confondu avec le plan de coupe repéré en I-I sur la figure 3.

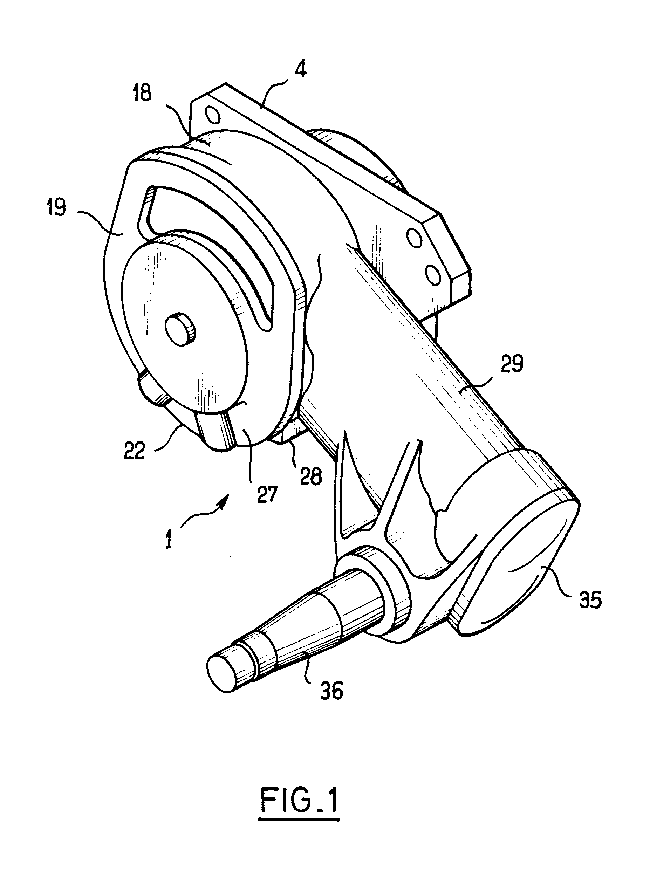

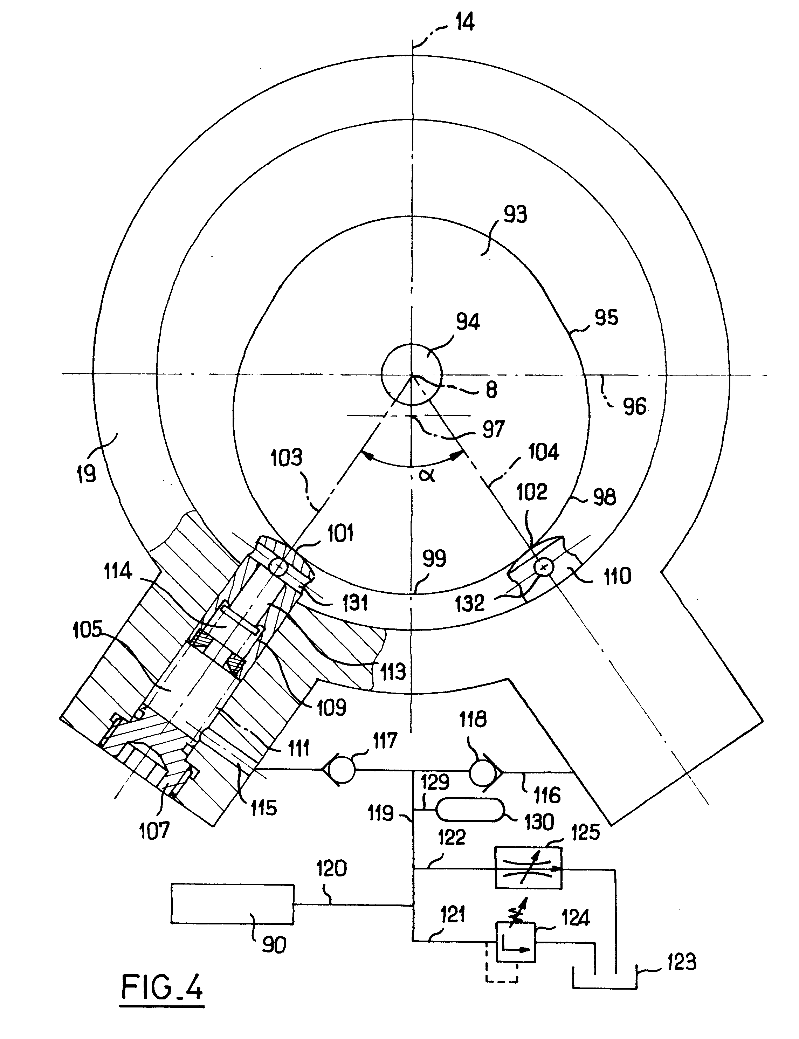

Le bras 29 est illustré dans une orientation horizontale à la figure 2 mais il est bien entendu qu'il peut tourner conjointement avec le carter 22, dont il est solidaire, autour de l'axe 8 par rapport au support 4 ; ce bras 29 présente une obliquité vers le bas, à partir du carter 22, dans son état illustré aux figures 1 et 4.

Longitudinalement à l'opposé de son raccordement avec le boîtier 18 du carter 22, le bras 29 porte de façon solidaire, avantageusement en une pièce, une fusée 36 de guidage à la rotation par rapport à lui, autour d'un axe 37 parallèle à l'axe 8, de l'organe de roulement 3 ; dans l'état illustré à la figure 2, un plan 38 commun aux axes 8 et 37 est horizontal mais il peut également être oblique, dès lors que des variations de niveau relatif de l'ossature 2 du véhicule et de l'organe de roulement 3 se traduisent par une rotation du bras 29 autour de l'axe 8 par rapport au support 2.

Le bras 29 est creusé de deux cavités tubulaires 31 et 32 présentant des axes longitudinaux respectifs 33, 34 rectilignes, parallèles l'un par rapport à l'autre ainsi que par rapport au plan 38 et situés dans le plan 30 de telle sorte que la cavité 31 soit placée au-dessus de la cavité 32, que les axes 33 et 34 soient tout deux situés au-dessus du plan 38, et que l'axe 33 de la cavité supérieure 31 coupe le plan 14 à proximité immédiate de l'axe 13, dans l'exemple non limitatif illustré.

A une extrémité transversale, correspondant au raccordement du bras 29 avec le boîtier 18, les cavités 31 et 32 communiquent librement avec l'intérieur du carter 22 alors qu'à leur autre extrémité transversale, constituant la zone du bras 29 la plus éloignée du carter 22, elles sont fermées par un couvercle étanche 35, rapporté de façon solidaire et étanche sur le bras 29 lui-même étanche.

Approximativement à mi-distance de ses deux extrémités transversales, la cavité inférieure 32 est obturée de façon permanente par une cloison 40 étanche, rapportée de façon solidaire sur le bras 29, si bien que la cavité inférieure 32 présente d'une part, à proximité immédiate du boîtier 18, une chambre 41 en communication directe avec l'intérieur du carter 22, et d'autre part, à proximité immédiate du couvercle 35, une chambre 42 qui communique quant à elle en permanence, via un trou 39 de passage de fluide aménagé entre les deux cavités 31 et 32 suivant une direction 43 perpendiculaire aux deux axes 33 et 34, avec la cavité 31.

De préférence, comme il est illustré, cette dernière est garnie intérieurement d'une chemise tubulaire longitudinale 44, d'axe 33, laquelle est percée d'un ou plusieurs orifices 46 en regard du trou 39 et d'une gorge 45, annulaire de révolution autour de l'axe 33, par laquelle le trou 39 débouche dans la cavité 31 à proximité du couvercle 35.

La chemise 44 sert à faciliter le guidage au coulissement longitudinal, à l'intérieur de la cavité tubulaire 31, d'un piston 47 étanche, étanchéifié vis-à-vis de la chemise 44 par des garnitures appropriées 48, lequel piston 47 est relié par une bielle 49 au tourillon 12 porté de façon solidaire par la manivelle 9, de telle sorte que les débattements angulaires du bras 29 autour de l'axe 8 par rapport au support 9 se traduisent par un mouvement de coulissement longitudinal du piston 47, dans un sens ou dans l'autre, à l'intérieur de la cavité 31.

A cet effet, la bielle 49 présente une première extrémité 50 par laquelle elle est articulée sur le tourillon 12, de préférence par l'intermédiaire d'un dispositif à rotule 51, de façon à pouvoir pivoter autour de l'axe 13 par rapport à la manivelle 9 ; la bielle 49 présente par ailleurs une deuxième extrémité 51 disposée à l'intérieur de la cavité 31, et qui présente elle-même la forme d'une rotule sphérique 52 dont le centre 53 est maintenu sur l'axe 33 par engagement de la rotule 52 dans une portée sphérique concentrique 54 d'un coulisseau annulaire 55, de révolution autour de l'axe 33, lequel coulisseau 55 est monté au coulissement longitudinal dans la chemise 44, du même côté du piston 47 que l'axe 13.

Alors que le piston 47 est étanche et étanchéifié vis-à-vis de la chemise 44, pour délimiter de façon étanche dans la cavité tubulaire 31 une chambre 56 située du côté du couvercle 35 et communiquant en permanence avec la chambre 42 de la cavité 32, et une chambre 57 quant à elle située du côté du carter 22 avec lequel elle communique, cette chambre 57 contenant le coulisseau 55 et la rotule 52, le coulisseau 55 est quant à lui conçu pour laisser librement passer le fluide hydraulique contenu dans le carter 22 et dans la chambre 57 vers un espace 58 subsistant entre ce coulisseau 55 et le piston 47 ; à cet effet, par exemple, des passages longitudinaux 59 sont percés dans le coulisseau 55, autour de la portée sphérique 54 ; ainsi, le fluide contenu dans le carter 22 et la chambre 57 peut parvenir à l'espace 58 et lubrifier le coulisseau 55 et le piston 57 à leur contact avec la chemise 44, la rotule 52 à son contact avec la portée sphérique 54, ainsi qu'à son contact avec un tampon 60 rapporté de façon solidaire sur le pistion 47, du côté de la chambre 57, pour servir de moyen de butée longitudinale du piston 47 contre la rotule 52, que la forme annulaire du coulisseau 55 laisse totalement dégagée vers le piston 47 ; cette disposition préférée permet d'assurer une transmission aussi directe que possible des efforts longitudinaux entre la bielle 49 et le piston 47 en limitant à un minimum les sollicitations transversales du piston 47 par la bielle 49 ; d'autres dispositions pourraient naturellement être adoptées, comme par exemple une butée du piston 47 non pas contre la bielle 49 mais contre le coulisseau 55 ; le mode de montage de la bielle 49 notamment sur le coulisseau 55 pourrait également être différent, dès lors qu'il définirait au moins un axe de rotation relative parallèle à l'axe 13 et dont la trace dans le plan 50 coïnciderait avec le centre 53 de la rotule 52 et de la portée sphérique 54 de la structure illustrée.

Le piston 47 est sollicité longitudinalement vers le coulisseau 55, de façon à assurer une butée mutuelle du tampon 60 et de la rotule 52 dans l'exemple illustré, par un fluide compressible formant ressort pneumatique, en pratique un gaz, logé dans les chambres communicantes 56 et 42 et agissant directement sur le piston 47 dans la chambre 56 ; le trou 39, la gorge 45 et l'orifice 46 (ou les orifices 46) sont dimensionnés de façon à n'opposer pratiquement aucune entrave au passage de ce fluide de l'une à l'autre des chambres 56 et 42 , c'est-à-dire de façon à ne provoquer aucun laminage de ce fluide lorsque le piston 47 coulisse longitudinalement à l'intérieur de la chemise 44.

Dans la chambre 42, le fluide compressible formant ressort baigne une vessie 61 en matériau souple, étanche, élastiquement extensible, laquelle vessie 61 présente vers la cloison 40, suivant l'axe 34, un orifice 62 avantageusement délimité par un embout 67 formant partie intégrante de la vessie 61 et placé en saillie suivant l'axe 34 vers la cloison 40 ; par sa périphérie 63 radialement extérieure, en référence à l'axe 34, l'embout 67 s'engage dans un alésage 66, d'axe 34, aménagé dans une paroi étanche 64 rapportée de façon solidaire et étanche dans la cavité 32, transversalement à l'axe 34, de façon à doubler la cloison 40 vers la chambre 42 en délimitant avec la cloison 40, dans la cavité 32, un volume intermédiaire 65 étanchéifié aussi bien vis-à-vis de la chambre 41 que du reste de la chambre 42 ; la totalité de la périphérie extérieure 63 de l'embout 67 est en contact étanche avec la paroi 64, ce qui définit à travers celle-ci un passage 68 raccordant l'intérieur de la vessie 61 avec le volume 65 tout en préservant l'étanchéité de ce dernier vis-à-vis de la partie de la chambre 42 extérieure à la vessie 61, c'est-à-dire vis-à-vis du fluide compressible emplissant les chambres 42, à l'extérieur de la vessie 61, et 56 ; le contact étanche entre l'embout 67 et la paroi 64 peut par exemple résulter d'un simple emboîtement de l'embout 67 dans l'alésage 66.

La vessie 61 délimite ainsi intérieurement, à l'intérieur de la chambre 42, une chambre 69 qui est destinée à recevoir, par l'intermédiaire du volume 65, un fluide hydraulique sensiblement incompressible dont le rôle est de réduire le volume disponible, à l'intérieur de la chambre 42, pour le fluide compressible formant ressort et, par une variation du volume de la chambre 69 consécutive à une introduction ou un prélèvement de fluide hydraulique sensiblement non compressible dans cette chambre, d'obliger une quantité plus ou moins grande de fluide compressible à rester dans la chambre 56 pour faire varier la position longitudinale du piston 47 dans la chemise 44 correspondant à l'équilibre entre le poids du véhicule et l'appui de l'organe de roulement au sol, c'est-à-dire, en d'autres termes, de faire varier la garde au sol.

Pour ce faire, des conduits schématisés par un trait mixte 70 sont aménagés à l'intérieur du bras 58, du flasque de carter 19 et du couvercle 27, d'une façon aisément déterminable par un homme du métier, pour relier d'une part le volume 65 intermédiaire entre la cloison 40 et la paroi 64, et d'autre part une chambre 71 aménagée dans le couvercle 67, suivant l'axe 8 comme il ressort à la figure 3 ; la chambre 71, placée en regard de l'arbre 7 suivant l'axe 8, loge de façon solidaire du couvercle 27, avec étanchéité mutuelle, une extrémité d'un tube 72 d'axe 8, lequel tube 72 traverse l'arbre 7 jusqu'à la plaque 6, suivant l'axe 8, par un alésage 73 aménagé dans l'arbre 7 avec des dimensions telles qu'il subsiste un jeu périphérique entre le tube 72 et l'arbre 7 ; au niveau de la plaque 6, le tube 72 est guidé à la rotation par rapport au support 4, autour de l'axe 8, par un palier 74 muni d'une garniture d'étanchéité tournante 75, et se raccorde à une chambre étanche 76 aménagée dans la plaque 6 et raccordée elle-même ,par une conduite 77, à des moyens 78 permettant d'introduire ou de prélever des volumes prédéterminés de fluide sensiblement incompressible ; les moyens 78, connus en eux-mêmes ,peuvent comporter par exemple une pompe hydraulique en liaison avec un réservoir de fluide hydraulique, à l'intérieur du véhicule.

Dans une variante de réalisation du dispositif qui vient d'être décrit, la vessie 61 pourrait être supprimée et remplacée par un piston 79, schématisé en traits mixtes à la figure 2, lequel serait monté à coulissement longitudinal dans la chambre 42 pour subdiviser celle-ci de façon étanche, entre une partie de chambre en communication directe avec la chambre 56 par le trou 39, et en une partie de chambre, correspondant à la chambre 69, en liaison fluidique avec le volume 65 par l'alésage 70 de la paroi 64.

En outre, de façon non illustrée et si les conditions d'implantation de la suspension 1 s'y prêtaient les chambres 56 et 42 raccordées par le trou 39 dans l'exemple illustré pourraient être placées dans des alignements respectifs non parallèles entre eux et/ou par rapport au plan 38, suivant le plan 30 ou de façon décalée par rapport à celui-ci ; on pourrait notamment disposer les chambres 56 et 42 dans un même alignement longitudinal, par exemple défini par l'axe 33, auquel cas se succéderaient dans ce même alignement le piston 47, les chambres 56 et 42 confondues, la vessie 61 ou le piston 79, la chambre 69 et la paroi 64 qui pourrait alors être définie par un couvercle se substituant au couvercle 35 ; une telle variante n'a pas été illustrée, mais sa réalisation à partir du mode de mise en oeuvre illustré et décrit précédemment est du domaine des aptitudes normales de l'homme du métier.

Le dispositif qui vient d'être décrit constitue un ressort pneumatique avec possibilité de réglage de garde au sol, et peut être utilisé en tant que tel sur un véhicule.

Il peut cependant également être muni de moyens d'amortissement des mouvements de rotation du bras 29 autour de l'axe 8 par rapport au support 4.

Ces moyens d'amortissement sont ici constitués par les moyens de freinage agissant, avec un effort de freinage asservi à la vitesse de rotation du bras 29 par rapport au support 4, entre des organes solidaires respectivement du bras 29 et du support 4, à l'encontre d'une rotation relative autour de l'axe 8.

A cet effet, dans l'exemple illustré, la manivelle 9 porte vers le bas, c'est-à-dire à l'opposé de la chape 11, une pluralité de nervures en queue d'aronde 80 parallèles à l'axe 8 et recevant, avec possibilité de coulissement relatif parallèlement à cet axe, mais sans possibilité de rotation relative autour de cet axe, des rainures de forme complémentaire 81 aménagées dans des secteurs 82 de disques de freinage, lesquels secteurs 82 sont juxtaposés le long de l'axe 8 perpendiculairement auquel ils présentent des plans moyens respectifs; les secteurs de disques de freinage 82 sont au nombre de deux dans l'exemple illustré, mais un seul de ces secteurs pourrait être prévu de même que l'on pourrait en prévoir plus de deux.

Naturellement, comme la manivelle 9, les secteurs de disques de freinage 82 sont disposés à l'intérieur du carter 22, entre le boîtier de carter 18 et le flasque de carter 19.

Complémentairement, le boîtier de carter 22 porte de façon solidaire, par l'intermédiaire du couvercle 28 localisé dans le dièdre défini par les plans 38 et 14, sous le plan 38 et du même côté du plan 14 que le bras 29, une pluralité de lames 83 présentant des plans moyens respectifs perpendiculaires à l'axe 8, le nombre et la disposition de ces lames 83 étant tels que chaque secteur de disque 82 soit interposé entre deux de ces lames ; en d'autres termes, dans l'exemple illustré, trois de ces lames 83 sont ainsi prévues, dont l'une est intercalée entre les deux secteurs de disques 82 alors que les deux autres sont placées respectivement de part et d'autre de l'ensemble ainsi formé par les deux secteurs de disques 82 et par la lame intermédiaire 83.

Chacune des lames 83 extrêmes porte une garniture de freinage 84 de type connu, vers le disque immédiatement voisin, alors que la lame 83 intermédiaire entre deux secteurs de disques 82, ou chaque lame de ce type, porte de part et d'autre une garniture de freinage 84.

Pour assurer une mise en contact, sous une pression réglée, des garnitures de freinage 84 et des secteurs de freinage 82, dont on remarquera qu'ils présentent autour de l'axe 8 un développement angulaire tel qu'un contact avec les garnitures de freinage 84 puisse s'établir dans toutes positions relatives du bras 29 et du support 4 par rotation relative autour de l'axe 8 dans des limites normales d'utilisation, les lames 83 coopèrent par conjugaison de forme avec des gorges 127, 128 parallèles à l'axe 8 et définies conjointement par le couvercle 28 et le boîtier de carter 18 ; ces gorges 127,128 guident les lames 83 au coulissement suivant une direction parallèle à l'axe 8; alors que celle de ces lames 83 qui est la plus proche de la plaque 6 du support 4 s'appuie contre le boîtier 18 parallèlement à l'axe 8, celle de ces lames 83 qui est la plus éloignée du support 4, c'est-à-dire la plus proche du flasque 19, est sollicitée par un vérin hydraulique de poussée 85, susceptible d'appliquer à cette lame 83 et, par l'intermédiaire de celle-ci, à l'ensemble des secteurs de disques 82 via les garnitures 84, un effort de pression mutuelle de valeur prédéterminée parallèlement à l'axe 8.

A cet effet, le flasque 19 présente vers le support 4, c'est-à-dire vers l'intérieur du carter 22, au moins un trou borgne 86 d'axe 87 parallèle à l'axe 8, en regard de la plaque 83 la plus proche du flasque 19, et ce trou borgne constitue un cylindre dans lequel peut évoluer, suivant l'axe 87, un piston 88 étanchéifié vis-à-vis du trou borgne 86 par une garniture d'étanchéité 89 pour délimiter à l'intérieur du trou borgne 86 une chambre étanche 90 ; dans cette chambre 90, est avantageusement logé un ressort hélicoïdal de compression 91 schématisé par des traits mixtes, lequel ressort 91 assure une pression minimale de contact entre les garnitures de freinage 84 et les secteurs de disque 82 même en l'absence de tout fluide sous pression à l'intérieur de la chambre 90.

Cependant, cette chambre 90 enferme également un tel fluide, dont on fait varier la pression en fonction de la vitesse de rotation du bras 29 par rapport au support 4 autour de l'axe 8, en fonction de lois d'évolution prédéterminées dont certains exemples, non limitatifs, seront décrits plus loin.

En vue de réaliser cet asservissement dans le cas du mode de mise en oeuvre de l'invention illustré aux figures 3 et 4, l'arbre 7 porte de façon solidaire, par exemple par boulonnage 92, à l'intérieur du carter 22 et directement en regard du couvercle 27, une came présentant un plan moyen 100 perpendiculaire à l'axe 8 et avantageusement constituée, dans l'exemple illustré, par la plaque de butée 93 rapportée de façon solidaire sur l'arbre 7 ; cette came est plus particulièrement visible à la figure 4.

Suivant l'axe 8, la came 93 est percée de part en part d'un alésage 94 autorisant le passage du tube 72 avec un jeu comparable à celui qu'autorise l'alésage 73; dans le sens d'un éloignement radial par rapport à l'axe 8 et dans un quelconque plan de coupe perpendiculaire à cet axe, elle présente une périphérie extérieure 95 de forme ovoïde.

Au-dessus d'un plan horizontal 96 incluant l'axe 8 et fixe par rapport au support 4, la forme de cette périphérie est indifférente pourvu que la came 93 joue le rôle de plaque-butée décrit précédemment ; en-dessous du plan 96, elle présente une forme circulaire d'axe 97 parallèle à l'axe 8 et situé dans le plan 14 sous l'axe 8, pour définir un chemin de came 98 présentant sous l'axe 8, dans le plan 14, un point 99 qui constitue le point du chemin de came 98 le plus éloigné de l'axe 8, avec une décroissance progressive de l'éloignement par rapport à l'axe 8 pour des points du chemin de came 98 de plus en plus éloignés du point 99, dans un sens de parcours du chemin 98 par rotation autour de l'axe 8, ou dans le sens de parcours opposé.

Suivant le plan moyen 100 de la came 93, considéré comme le plan moyen de son chemin de came 98 et confondu avec le plan de coupe repéré en IV-IV à la figure 3, le flasque de carter 19 présente en regard du chemin de came 98 deux toucheaux de came 101 et 102 dont chacun est solidaire du flasque 19 à la rotation autour de l'axe 8 mais peut coulisser par rapport au flasque de carter 19, radialement en référence à l'axe 8, de façon à pouvoir rester au contact du chemin de came 98 quelle que soit la position angulaire du bras 29 par rapport au support 4, autour de l'axe 8, dans des limites normales de fonctionnement.

A cet effet, le flasque de carter 19 est percé, suivant des axes respectifs 103 et 104 radiaux par rapport à l'axe 8 et situés dans le plan 100, de deux alésages 105 et 106 dont chacun débouche dans le carter 12, vers le chemin de came 98, en étant obturé à l'opposé par un bouchon respectif 107,108; les axes 103 et 104 sont disposés symétriquement l'un de l'autre par rapport à un plan qui se confond avec le plan vertical 14 dans l'état d'équilibre statique illustré aux figures 1 et 4, avec un décalage angulaire mutuel $\alpha$ des axes 103 et 104 par rapport à l'axe 8;ce décalage angulaire $\alpha$ est au moins égal au débattement angulaire du bras 29 par rapport au support 4,autour de l'axe 8, dans les conditions normales d'utilisation; ce décalage est de l'ordre de 70° dans l'exemple illustré ; naturellement, ce chiffre n'est donné qu'à titre d'exemple non limitatif.

A l'intérieur de chacun des alésages 105 et 106, est monté, à coulissement suivant l'axe 103,104 de cet alésage, un piston respectif 109, 110 qu'un ressort hélicoïdal de compression respectif 111,112, interposé entre ce piston et le bouchon obturant l'alésage correspondant, sollicite élastiquement vers l'axe 8, de telle sorte que chacun des pistons109, 110 forme une saillie hors de l'alésage correspondant 105, 106 à l'intérieur du carter 22, et s'appuie contre le chemin de came 98 par une surface d'extrémité transversale par rapport à l'axe de l'alésage correspondant, laquelle surface définit le toucheau de came 101, 102.

On conçoit qu'ainsi, une rotation du bras 29 et avec lui des axes 103 et 104 autour de l'axe 8 par rapport au support 4 et à la came 93 provoque des mouvements de va et vient alternatifs des deux pistons 109 et 110 dans les alésages respectifs 105, 106 suivant les axes 103, 104 de ces alésages ; la came est conformée, en fonction des positions relatives des axes 103 et 104,de telle sorte qu'un mouvement du bras 29 à la rotation par rapport au support 4 à partir de l'état d'équilibre statique se traduise, quels que soient le sens et l'amplitude de ce mouvement dans les limites normales d'utilisation, par des mouvements en opposition des pistons 109,110 dans les alésages 105, 106; ainsi, dans l'exemple illustré où les axes 103 et 104 sont décalés mutuellement de 70°, où le chemin de came 98 présente un développement angulaire d'au moins 180° (soit au moins 2 α), en référence à l'axe 97, avec répartition symétrique de part et d'autre du plan 14 et si l'on suppose que le débattement du bras 29 à la rotation de l'axe 8 par rapport au support 4, à partir d'une position du plan 38 correspondant à l'équilibre statique, est limité à un maximum de 35° (soit α/2) vers le haut comme vers le bas, la rotation du bras 20 vers le haut à partir de l'équilibre statique se traduit par :

- un éloignement, vis-à-vis du point 99, du point de contact, avec le chemin de came 98, du toucheau 102 défini par le piston 110 logé dans l'alésage 106 situé du même côté du plan 14 que le bras 29 lorsque le plan 38 est horizontal, c'est-à-dire par une sortie du piston 110,

- un rapprochement vis-à-vis du point 99 du point de contact, avec le chemin de came 98, du toucheau de came 101 définit par le piston 109 correspondant à l'alésage 105 situé de l'autre côté du plan 14 lorsque le plan 38 est horizontal, c'est-à-dire par une rentrée du piston 109 dans l'alésage 105.

Une rotation en sens inverse produit un effet inverse.

On remarquera que d'autres orientations respectives du chemin de came 98 et des alésages de réception des pistons 109 et 110 pourraient être choisies sans que l'on sorte pour autant du cadre de la présente invention, dès lors que l'on obtiendrait un effet de déplacement des pistons en opposition de phase lors de la rotation du bras dans un sens ou dans l'autre.

Cet effet est utilisé pour produire un pompage de fluide hydraulique à l'intérieur du carter 22 et établir, au moyen de ce fluide hydraulique, une pression dans la chambre 90 de sollicitation du piston de freinage 88.

A cet effet, comme il ressort plus particulièrement de l'examen du piston 109 illustré à la figure 4, étant entendu que le piston 110 est en tout point identique au piston 109, chacun des pistons 109 et

110 est creux et présente à proximité immédiate du toucheau de came correspondant 101, 102 un réseau de canaux 131, 132 placé de telle sorte que ces canaux débouchent en permanence à l'intérieur du carter 22 quel que soit le point du chemin de came 98 avec lequel s'établit le contact du toucheau de came 101, 102 dans les limites normales d'utilisation de l'organe de suspension ; à l'intérieur du piston respectivement correspondant, chacun des réseaux de canaux 131, 132 débouche dans un canal axial tel que 113 muni d'un clapet anti-retour tel que 114 de structure connue, autorisant un passage de fluide des canaux tels que 131 vers l'intérieur de l'alésage tel que 105 via le canal tel que 113, en interdisant un passage en sens inverse ; ainsi, un mouvement de sortie du piston se traduit par l'introduction, dans l'alésage tel que 105, de fluide en provenance du carter 22 alors qu'un mouvement de rentrée du piston dans l'alésage provoque un refoulement du fluide ainsi introduit, ce refoulement s'effectuant par l'intermédiaire d'un conduit tel que 115, aménagé dans l'alésage tel que 105 à proximité immédiate du bouchon tel que 107 d'obturation de cet alésage.

Le conduit 115 et son homologue 116 correspondant à l'alésage 106 comportent un clapet anti-retour respectif 117, 118 de type connu, autorisant le passage de fluide dans le sens d'un refoulement hors de l'alésage 105, 106 en interdisant un passage en sens inverse, et les deux conduits 115 et 116 se réunissent, en aval des clapets anti-retour 117 et 118 en référence au sens du passage autorisé, en un conduit unique 119 dont dérivent d'une part un conduit 120 de raccordement à la chambre 90, et d'autre part deux conduits 121 et 122 conduisant en parallèle à un réservoir de fluide hydraulique 123 qui peut être constitué par le carter 22 lui-même.

Le conduit 121 comporte en série un clapet de surpression 124, réglable, alors que le conduit 122 comporte un étranglement réglable 125 permettant d'établir à travers lui un débit de fuite réglable ; l'étranglement 125 peut être avantageusement piloté en fonction des pressions respectivement en aval et en amont dans le conduit 122 afin de supprimer l'influence de la viscosité du fluide, c'est-à-dire de la température, sur ce débit de fuite.

Ainsi, lorsque le bras 29 tourne dans un sens ou dans l'autre autour de l'axe 8 par rapport au support 4, l'un ou l'autre des pistons 109, 110 provoque une alimentation du conduit 119 en fluide hydraulique en provenance du carter 22, avec un débit fonction de la vitesse de déplacement du piston dans son alésage, c'est-à-dire de la vitesse de rotation du bras par rapport au support.

Ce débit, en passant par l'étranglement 125, produit une pression qui est fonction de la perte de charge dans ledit étranglement et qui s'établit uniformément dans les conduits 119,120,121,122 et par conséquent dans la chambre 90, ce qui applique au garnitures de freinage 84 et secteurs de disque de freinage 82 un effort de contact mutuel directement fonction de la pression régnant dans le conduit 119 ; de cet effort de contact mutuel résulte, par friction entre les garnitures de freinage 84 et les secteurs de disque de freinage 82, un effort d'amortissement présentant par rapport à l'axe 8 un moment d'amortissement freinant la rotation du bras 29 dans le sens considéré, et ceci d'autant plus que la vitesse de cette rotation est élevée ; la perte de charge dans l'étranglement 125 suit une loi sensiblement parabolique de telle sorte que des mouvements de faible amplitude des pistons 109 et 110 dans leurs alésages respectifs restent sans effet sur le piston 88, c'est-à-dire sur l'effort d'amortissement procuré par le contact sous pression entre les garnitures de freinage 84 et les secteurs de freinage 83.

Tant que la pression dans les conduits 119,120,121,122 reste inférieure à la pression d'ouverture du clapet de surpression 124, le débit de fluide est acheminé en totalité via le conduit 122 et l'étranglement 125 au réservoir 123.

Si la vitesse de rotation du bras 29 autour de l'axe 8 par rapport au support 4 est suffisamment élevée pour que s'établisse dans le conduit 119, du fait du refoulement de fluide par l'un ou l'autre des pistons 109 et 110 en fonction du sens de rotation, une pression excédant le seuil d'ouverture du clapet de surpression 124, lequel seuil est établi en fonction d'un effort maximal d'amortissement désiré, le fluide s'écoule via les conduits 121 et 122 vers le réservoir 123 ; la pression dans les conduits 119,120,121,122 reste alors constante et égale à la pression d'ouverture du clapet de surpression 124 ; l'effort d'amortissement reste alors lui-même constant et présente une valeur constituant son maximum.

On remarquera que l'effort d'amortissement, sensiblement proportionnel à la pression régnant dans la chambre 90, elle-même fonction de la perte de charge créée en 125 par le débit de fluide dans le conduit 122, tend à s'annuler si ce débit s'annule, c'est-à-dire notamment lorsque le bras 29 s'immobilise par rapport au support 4 entre une course de rotation dans un sens et une course de rotation dans l'autre sens puisque les deux pistons 109 et 110 sont alors immobiles ; pour maintenir un débit résiduel au travers de l'étranglement 125 dans le conduit 122, c'est-à-dire empêcher une annulation presque totale de l'effort d'amortissement, lors des phases transitoires d'inversion de sens de rotation du bras 29 autour de l'axe 8 par rapport au support 4, on prévoit de préférence un accumulateur de pression 130 raccordé au conduit 119 par un conduit 129 ; cet accumulateur de pression 130 est calculé pour n'avoir qu'un effet négligeable sur la pression dans la chambre 90 lorsque le bras 29 tourne autour de l'axe 8 par rapport au support 4, en ne jouant alors éventuellement qu'un rôle de filtre réduisant les effets de variations du débit dues à des mouvements des pistons 109 et 110 à fréquence élevée dans leurs alésages respectifs.

On remarquera qu'en faisant varier la pente du chemin de came 98, c'est-à-dire en donnant des valeurs différentes à l'angle que forment les tangentes à ce chemin de came 98 en différents points, par rapport à des rayons joignant respectivement ces points à l'axe 8, on peut obtenir non seulement un asservissement de l'effort d'application des garnitures de freinage 85 sur les secteurs de disque de freinage 82 à la vitesse de rotation du bras 29 autour de l'axe 8 par rapport au support 4, mais également à la position angulaire du bras 29 par rapport au support 4 lors de cette rotation, par exemple pour augmenter l'amortissement et durcir ainsi la suspension lorsque le bras approche des amplitudes limites admissibles, en utilisation normale, par rapport à une position moyenne par exemple définie par une horizontalité du plan 38.

En outre, contrairement à ce qui a été décrit et représenté, on peut donner au chemin de came 98 une forme dissymétrique par rapport au plan 14 avec lequel se confond le plan de symétrie entre les axes respectifs 103, 104 des alésages 105, 106 lorsque le bras 29 occupe sa position d'équilibre statique et/ou différencier les sections respectives des pistons 109 et 110, de façon à différencier l'effort d'amortissement en fonction du sens de rotation du bras 29 par rapport au support 4.

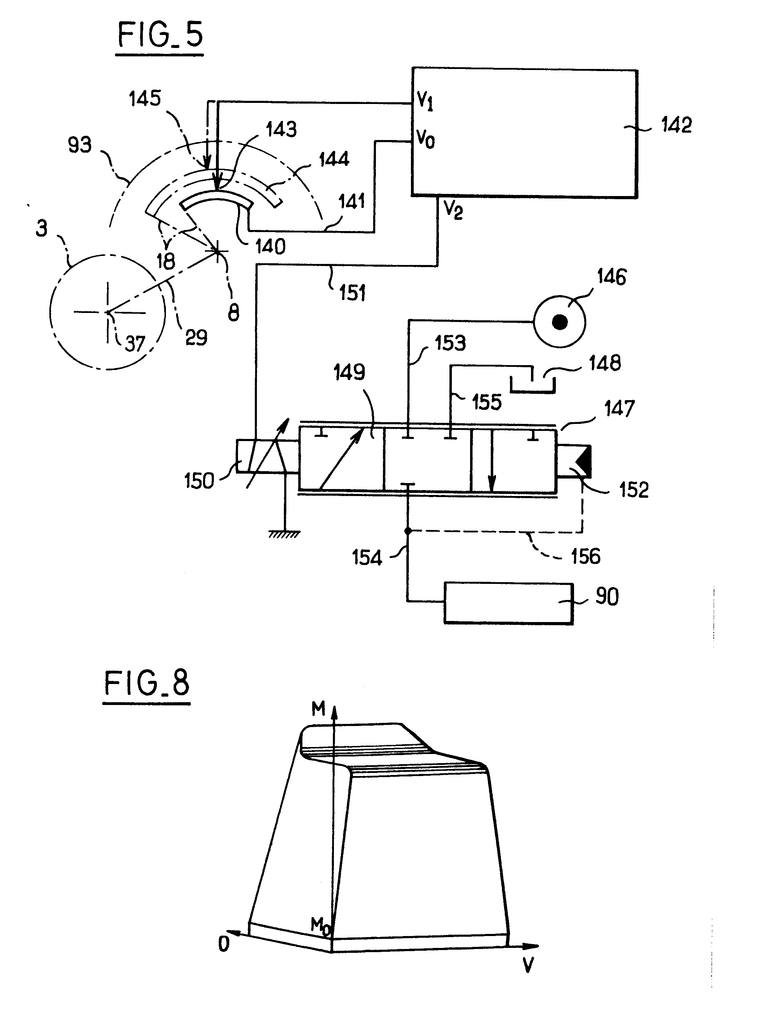

Dans le cas du mode de mise en oeuvre de l'invention illustré aux figures 5 à 8, les moyens d'asservissement de type mécano-hydraulique constitués notamment par la came 93, les pistons de pompage 109 et 110 et le circuit hydraulique illustré à la figure 4 sont remplacés par des moyens d'asservissement des types électronique et électro-hydraulique qui vont être décrits à présent, plus particulièrement en référence à la figure 5 ; la suspension reste cependant identique, par ailleurs, à ce qui a été décrit en référence aux figures 1 à 4 si bien que l'on retrouve à la figure 5 les références 3, 8, 18, 29, 37, 90, 93, étant entendu que la plaque de butée 93 ne joue dans le cas du mode de réalisation illustré à la figure 5 aucun rôle de chemin de came.

Dans le cas de ce mode de réalisation, le boîtier 18 porte de façon solidaire une piste potentiométrique 140 qui se trouve ainsi solidarisée avec le bras 29 vis-à-vis d'une rotation autour de l'axe 8 par rapport au support 4 (non illustré à la figure 5) et présente une forme de révolution autour de l'axe 8 avec un développement angulaire, en référence à cet axe, au moins égal et de préférence supérieur au débattement angulaire possible du bras 29 autour de l'axe 8 par rapport au support 4 lorsque la suspension est en service.

A l'une de ses extrémités, la piste potentiométrique 140 est raccordée par un conducteur électrique 141 à une source de tension constante intégrée à une électronique de commande 142 qui sera décrite plus loin alors que sur cette piste prend appui, avec possibilité de rotation relative autour de l'axe 8 et contact électrique permanent, un capteur 143 constitué par exemple par un curseur, porté par le support 4, par exemple par l'intermédiaire de la plaque de butée 93, sans possibilité de rotation relative autour de l'axe 8 ; la position angulaire du capteur 143, en référence à l'axe 8, sur la plaque de butée 93 est définie de telle sorte que le capteur 143 occupe vis-à-vis de la piste potentiométrique 140 une position angulaire intermédiaire entre les positions angulaires respectives des extrémités de cette piste lorsque la suspension occupe une position d'équilibre statique, et dispose de part et d'autre d'une possibilité de débattement angulaire suffisant, par rapport à la piste potentiométrique 140, pour ne pas quitter cette dernière quelle que soit l'amplitude des mouvements de rotation du bras 29 autour de l'axe 8 par rapport au support 4 lorsque la suspension est en service.

Ainsi, si $V_0$ désigne la tension d'alimentation de la piste potentiométrique 140 par le conducteur 141, le capteur 143 délivre un signal de tension $V_1$ qui est fonction de la position angulaire du bras 29 par rapport au support 4, en référence à l'axe 8.

On remarquera qu'un tel signal peut être obtenu par d'autres moyens, et par exemple par lecture optique d'une piste 144, remplaçant la piste potentiométrique 140, au moyen d'un capteur optique 145, remplaçant le capteur électrique 143, ou par tout autre type de codeur numérique ; bien que les codeurs numériques de type incrémentiel puissent être adoptés, on préférera les codeurs numériques de type absolu, délivrant soit une tension $V_1$ par conversion numérique/analogique incorporée au capteur, soit plus simplement une information numérique codée directement représentative de la position angulaire du bras 29 par rapport au support 4 à chaque instant, et par conséquent directement exploitable pour piloter une éventuelle correction d'assiette.

L'Homme du métier comprendra aisément que d'autres types de capteurs peuvent également être utilisés sans que l'on sorte pour autant du cadre de la présente invention, comme par exemple un capteur de type génératrice tachymétrique, délivrant un signal de tension directement fonction de la vitesse de rotation du bras 29 autour de l'axe 8 par rapport au support 4, avec un signe représentatif du sens de cette rotation.

Le signal fourni par le capteur 143 ou 145 ou autre est acheminé à l'électronique de commande 142 qui conserve ce signal et, s'il s'agit d'un signal représentatif de la position angulaire ou du déplacement angulaire du bras 29 par rapport au support 4, le dérive en un signal représentatif de la vitesse de rotation du bras 29 par rapport au support 4, avec un signe caractéristique du sens de cette rotation.

Le signal représentatif de la vitesse est alors traité par l'électronique de commande 142, en fonction de lois mémorisées dans cette dernière, pour émettre un signal électrique $V_2$ utilisé pour piloter une pression hydraulique, appliquée à la chambre 90 du frein au moyen d'un modulateur de pression 147 et à partir d'une source 146 de fluide hydraulique sous pression, alimentée à partir d'un réservoir 148 qui peut avantageusement être constitué par le carter 22.

Différents types d'actionneurs hydrauliques peuvent être utilisés à titre de modulateurs de pression 147 sans que l'on sorte du cadre de la présente invention, pour autant qu'ils permettent de moduler une pression en fonction d'un signal électrique $V_2$, soit en boucle ouverte, soit en boucle fermée avec recopie de la pression par un capteur de pression placé près de la chambre 90 par exemple.

Ainsi, de façon non représentée, le modulateur 147 pourrait être constitué par une servo-valve "pression" excitée par le signal électrique $V_2$, ou encore par une servo-valve "débit" munie d'un asservissement pression (qui pourrait être avantageusement incorporé à l'électronique 142) utilisant l'information de contre-réaction provenant du capteur de pression 156.

Dans l'exemple illustré, le modulateur de pression 147 est constitué par un tiroir 149 occupant à chaque instant une position d'équilibre entre les actions respectives d'un électro-aimant proportionnel 150, auquel le signal électrique $V_2$ est acheminé par un conducteur électrique 151, et d'une pression hydraulique de recopie dans une chambre 152 pour établir dans une conduite 154 menant à la chambre 90 une pression modulée entre des valeurs extrêmes délivrées par une conduite 153 en provenance de la source 146 et une conduite 155 de retour au reservoir 148.

On remarquera que de la conduite 154 dérive une conduite 156 d'alimentation de la chambre 152 en pression de recopie.

Comme on l'a dit plus haut, le signal $V_2$ commandant le déplacement du tiroir 149, c'est-à-dire modulant la pression dans la chambre 90, est déterminé par l'électronique de commande 142, en fonction du signal représentatif de la vitesse de rotation du bras 29 autour de l'axe 8 par rapport au support 4, ainsi qu'en fonction de lois mémorisées dans l'électronique de commande 142 et qui peuvent être choisies à volonté.

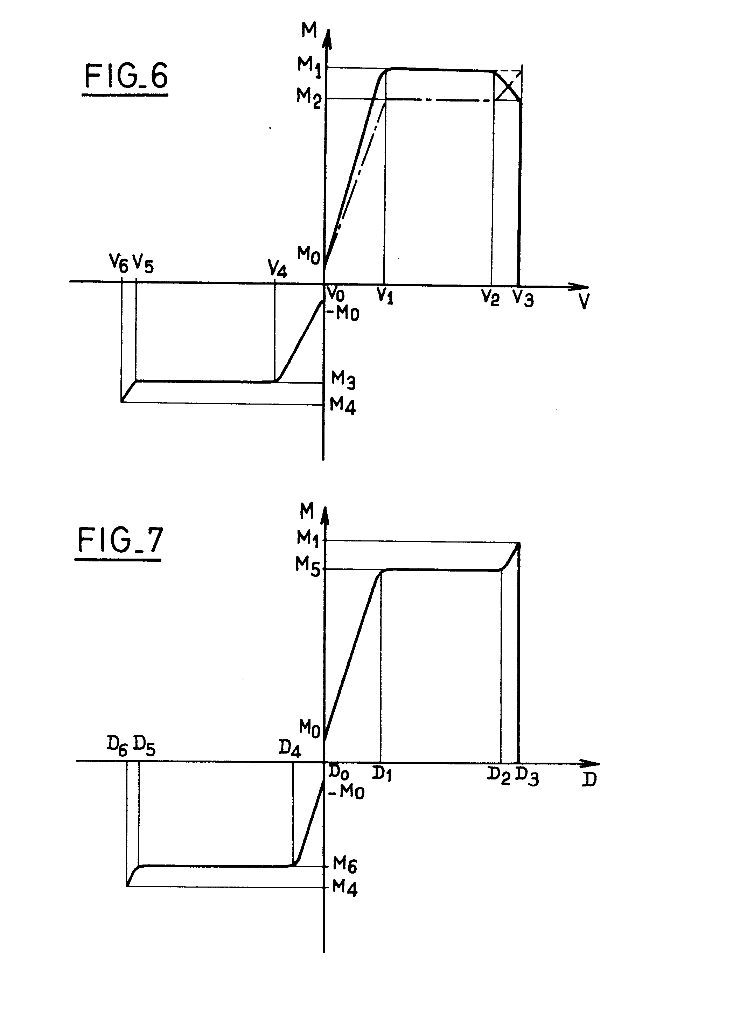

La figure 6 illustre à titre d'exemple non limitatif un mode de variation du moment d'amortissement M (directement proportionnel à l'effort d'amortissement) en fonction de la vitesse V de rotation du bras 29 autour de l'axe 8 par rapport au support 4 ; les abscisses et ordonnées positives correspondent à un déplacement ascendant de l'organe de roulement 3, par rapport au support 4, alors que les abscisses et ordonnées négatives correspondent à un déplacement descendant de l'organe de roulement 3, par rapport au support 4.

Dans cet exemple, si l'organe de roulement 3 subit par rapport au support 4 un déplacement ascendant, la croissance de la vitesse V de rotation du bras 29 autour de l'axe 8 par rapport au support 4 à partir d'une valeur $V_0$ nulle ou pratiquement nulle entraîne l'évolution suivante du moment d'amortissement M :

- de la valeur initiale $V_0$ à une valeur $V_1$, le moment d'amortissement croît sensiblement proportionnellement à la vitesse, d'une valeur initiale $M_0$, due à l'action du ressort 91 sur le piston 88 dans la chambre 90, jusqu'à une valeur $M_1$ qui constitue un maximum ;

- lorsque la vitesse V augmente pour passer de $V_1$ à $V_2$, le moment d'amortissement reste constant à sa valeur $M_1$ ;

- lorsque la vitesse croît encore, de sa valeur $V_2$ à une valeur maximale $V_3$, le moment d'amortissement décroît de la valeur $M_1$ à la valeur $M_2$, sensiblement proportionnellement à l'accroissement de la vitesse.

Naturellement, les valeurs $V_0$, $V_1$, $V_2$, $V_3$, $M_0$, $M_1$, $M_2$ sont prédéterminées à volonté et d'autres modes d'évolution pourraient être choisis et l'on a, à titre d'exemple non limitatif, illustré à la figure 6 deux autres modes d'évolution du moment d'amortissement M en fonction de la vitesse V lorsque l'organe de roulement 3 accomplit un mouvement ascendant, à savoir :

- un mode d'évolution identique à celui qui vient d'être décrit à cette exception près que le moment d'amortissement reste constant à la valeur $M_1$ de la vitesse $V_1$ à la vitesse $V_3$ constituant un maximum de vitesse envisagée, comme on l'a schématisé en pointillés ;

- un mode d'évlution, schématisé en traits mixtes, selon lequel le moment croît approximativement proportionnellement à la vitesse de rotation de la valeur $M_0$ à la valeur $M_2$ lorsque la vitesse de rotation passe de la valeur $V_0$ à la valeur $V_1$, puis reste constant à la valeur $M_2$ lorsque la vitesse croît de la valeur $V_1$ à la valeur $V_2$, pour croître ensuite de façon proportionnelle à la vitesse, jusqu'à la valeur $M_1$, lorsque la vitesse croît de la valeur $V_2$ à la valeur $V_3$.

Pour des déplacements descendants de l'organe de roulement 3, on a illustré à titre d'exemple non limitatif une évolution selon laquelle :

- la valeur absolue du moment d'amortissement croît sensiblement proportionnellement à la valeur absolue de la vitesse de rotation du bras 29 autour de l'axe 8 par rapport au support 4, en passant de la valeur $M_0$ à la valeur $|M_3|$ prédéterminée lorsque la vitesse passe de la valeur $V_0$ à une valeur $V_4$ également prédéterminée ;

- le moment d'amortissement reste constant à la valeur $M_3$ lorsque la vitesse passe de la valeur $V_4$ à la valeur $V_5$, de valeur absolue supérieure à celle de $V_4$ et prédéterminée ;

- la valeur absolue du moment d'amortissement croît sensiblement proportionnellement à la valeur absolue de la vitesse lorsque cette dernière passe de la valeur $V_5$ à une valeur $V_6$ prédéterminée, le moment d'amortissement passant alors de la valeur $M_3$ à une valeur $M_4$ prédéterminée.

Il est possible de ne prendre en compte qu'une courbe déterminée d'évolution du moment d'amortissement en fonction de la vitesse de rotation du bras 29 autour de l'axe 8 par rapport au support 4 pour déterminer le signal $V_2$ pilotant la pression dans la chambre 90, c'est-à-dire l'effort d'amortissement et le moment d'amortissement, exclusivement en fonction de la vitesse de rotation du bras 29 autour du deuxième axe 8 par rapport au support 4 dans l'un et l'autre sens.

Cependant, on peut de façon particulièrement commode prendre en compte également la position angulaire du bras à chaque instant pour asservir également l'effort d'amortissement ou le couple d'amortissement à cette variable.

A cet effet, dans l'électronique de commande 142 est également mémorisée une courbe du type illustré, à titre d'exemple non limitatif, à la figure 7 à savoir une courbe d'évolution du moment d'amortissement M en fonction d'un déplacement angulaire D du bras 29, autour de l'axe 8, par rapport au support 4 à partir de la position d'équilibre statique ; les abscisses et ordonnées positives correspondent au cas où la rotation s'effectue dans un sens correspondant, pour l'organe de roulement 3, à un déplacement au-dessus de la position d'équilibre statique par rapport au support 4 alors que les abscisses et ordonnées négatives correspondent à un déplacement du bras lorsque l'organe de roulement 3 se trouve en dessous de sa position d'équilibre statique par rapport au support 4.

Dans l'exemple non limitatif illustré à la figure 7, l'accroissement de l'amplitude de déplacement angulaire du bras 29 autour de l'axe 8 par rapport au support 4, lorsque l'organe de roulement 3 se trouve au-dessus de sa position d'équilibre statique, se traduit de la façon suivante sur le moment d'amortissement M :

- le passage d'une valeur initiale $D_0$ nulle ou pratiquement nulle à une valeur $D_1$ provoque un accroissement sensiblement proportionnel du moment d'amortissement, qui passe de la valeur $M_0$ précitée à une valeur $M_5$ inférieure à la valeur $M_1$ précitée ;

- lorsque l'amplitude angulaire croît ensuite de la valeur $D_1$ à une valeur $D_2$, le moment d'amortissement reste constant, à la valeur $M_5$ ;

- lorsque, enfin, l'amplitude de déplacement croît de la valeur $D_2$ à la valeur $D_3$, considérée comme un maximum, le moment d'amortissement croît de façon sensiblement proportionnelle jusqu'à la valeur maximale $M_1$ précitée.

Une évolution inverse se produit lorsque l'amplitude de déplacement décroît alors que l'organe de roulement 3 se trouve au-dessus de sa position d'équilibre statique par rapport au support 4.

Lors d'un déplacement alors que l'organe de roulement 3 se trouve en dessous de cette position, un accroissement de la valeur absolue de l'amplitude de déplacement angulaire du bras 29 à partir de la position d'équilibre statique se traduit de la façon suivante :

- la valeur absolue du moment d'amortissement croît sensiblement proportionnellement à la valeur absolue de l'amplitude lorsque cette dernière passe d'une valeur initiale $D_0$ nulle ou pratiquement nulle à une valeur $D_4$, le moment d'amortissement passant alors de la valeur-$M_0$ à une valeur $M_6$ dont la valeur absolue est inférieure à la valeur absolue de $M_4$ ;

- le moment d'amortissement reste constant à la valeur $M_6$ lorsque l'amplitude passe de la valeur $D_4$ à une valeur $D_5$ ;

- la valeur absolue du moment d'amortissement croît proportionnellement à la valeur absolue de l'amplitude de déplacement lorsque cette dernière passe de la valeur $D_5$ à une valeur $D_6$, le moment d'amortissement passant alors de la valeur $M_6$ à la valeur $M_4$ précitée.

37

L'évolution inverse se produit lorsque le bras 29 regagne la position d'équilibre statique.

Naturellement, les valeurs $D_0$, $D_1$, $D_2$, $D_3$, $D_4$, $D_5$, $D_6$, $M_5$, $M_6$ peuvent être prédéterminées à volonté ; toutefois, de préférence, $M_5$ est égal à $M_2$ de même que $M_6$ est égal à $M_3$.

Dans cette hypothèse, on a tracé à la figure 8 un diagramme tridimensionnel représentant l'évolution du moment d'amortissement M en fonction de la vitesse V de rotation du bras 29 autour de l'axe 8 par rapport au support 4 et de l'amplitude D de cette rotation à partir de la position d'équilibre statique lorsque l'organe de roulement 3 se déplace vers le haut au-dessus de la position d'équilibre statique, étant bien entendu que l'on aurait pu effectuer des tracés analogues en ce qui concerne les déplacements de l'organe de roulement 3 vers le bas au-dessus de sa position d'équilibre statique ainsi que vers le bas et vers le haut en dessous de sa position d'équilibre statique.

Naturellement, les courbes d'asservissement en fonction de la vitesse ou de l'amplitude peuvent être établies, de façon aisément déterminable par un Homme du métier, pour introduire un filtrage rendant le moment d'amortissement insensible à des rotations lentes, ou de faible amplitude, ou de haute fréquence du bras 29 autour de l'axe 8 par rapport au support 4 ; on remarquera que l'évolution, indiquée en traits pleins à la figure 6, du moment d'amortissement M de la valeur $M_1$ à la valeur $M_2$ lorsque la vitesse de rotation du bras croît de la valeur $V_2$ à la valeur $V_3$ constitue une filtration à l'encontre de rotations alternatives à fréquences élevées, lesquelles consistent en une alternance rapide d'accroissements de vitesse de rotation du bras dans un sens et dans l'autre ; le choix des valeurs de $M_0$, $V_0$, $D_0$ détermine quant à lui la plus ou moins grande sensibilité du moment d'amortissement à des rotations lentes ou de faible amplitude du bras par rapport au support.

L'Homme du métier comprendra aisément que la réalisation de l'électronique de commande 142 pour réaliser des asservissements du type indiqué ci-dessus, ou d'autres types est du domaine de ses aptitudes normales.

On remarquera qu'en disposant les secteurs de disques de freinage 82 et les garnitures 84 à la partie inférieure du carter 22, on est assuré de ce qu'ils baignent en permanence dans le fluide hydraulique placé dans ce carter 22.

Ainsi, ces éléments sont lubrifiés et refroidis en permanence.

Pour assurer un tel effet également au niveau du coulisseau 55 et du piston 47 ainsi qu'au niveau du tourillon 12, des moyens peuvent être avantageusement prévus pour assurer que, en dépit des prélèvements momentanés du fluide hydraulique dans le carter et du mouvement du piston 47 dans la chemise 44, et quelle que soit par ailleurs la température à laquelle est porté ce fluide, le carter 22 soit rempli au maximum de fluide hydraulique au moins dans certaines positions angulaires du bras par rapport au support, dans les conditions normales d'utilisation.

A cet effet, à l'intérieur du carter 22 est avantageusement prévue une vessie 126 en matériau souple, étanche, élastiquement extensible, laquelle vessie contient un gaz sous pression qui, comme le fluide compressible logé dans les chambres 56 et 42, peut avantageusement être constitué par de l'azote ; de façon particulièrement avantageuse, on a placé cette vessie dans la chambre ·'1 délimitée, à l'intérieur de la cavité 32, par la cloison 40, si bien qu'en raison d'un tel positionnement, les variations de volume de la vessie 126 provoquent à proximité immédiate des garnitures de freinage 84 et secteurs de disques de freinage 82 une circulation du fluide hydraulique du carter 22.

Dans d'autres modes de réalisation, la vessie 126 pourrait être complétée ou remplacée par des moyens accumulateurs de même fonction, disposés de façon appropriée.

Naturellement, les modes de mise en oeuvre de l'invention qui viennent d'être décrits ne constituent que des exemples non limitatifs, et l'on pourra prévoir de nombreuses variantes aux dispositions qui viennent d'être décrites, sans sortir pour autant du cadre de la présente invention.

## REVENDICATIONS

1. Suspension pour véhicule, du type comportant :

- un support (4) susceptible d'être solidarisé avec une ossature (2) du véhicule,

- un bras longitudinal (29),

- des moyens (36) de liaison d'un organe de roulement (3) avec le bras (29), définissant un premier axe transversal (37) de rotation de l'organe de roulement (3) par rapport au bras (29),

- des premiers moyens (7, 16, 17, 22) de liaison du bras (29) avec le support (4), définissant un deuxième axe transversal (8) de rotation du bras (29) par rapport au support (4), le deuxième axe (8) étant parallèle au premier axe (37) et décalé longitudinalement par rapport à celui-ci,

- des seconds moyens (9, 49, 47) de liaison du bras (29) avec le support (4), définissant une position angulaire d'équilibre du bras (29) à la rotation autour du deuxième axe (8) par rapport au support (4) et autorisant élastiquement des mouvements de rotation du bras (29) autour du deuxième axe (8) par rapport au support (4) dans deux sens inverses à partir de ladite position angulaire d'équilibre,

- deux organes complémentaires de freinage par friction (82, 84),

- des moyens (80, 28) de solidarisation desdits organes (82, 84,) à l'encontre d'une rotation autour du deuxième axe (8) respectivement par rapport au bras (29) et par rapport au support (4),

- des moyens (88) de mise en contact mutuel, sous pression, des premier et second organes (82, 84),

- des moyens (90, 140 à 155, 93, 109, 117, 118) d'asservissement de la pression de mise en contact mutuel des premier et second organes (82, 84) au moins à la vitesse de rotation du bras (29) autour du deuxième axe (8) par rapport au support (4) dans un premier sens,

caractérisée en ce qu'elle comporte en outre des moyens (90, 140 à 155, 93, 110, 117, 118) d'asservissement de la pression de mise en contact mutuel des premier et second organes (82, 84) au moins à la vitesse de rotation du bras (29) autour du deuxième axe (8) par rapport au support (4) dans un deuxième sens opposé au premier sens.

2. Suspension selon la revendication 1, caractérisée en ce qu'elle comporte des moyens (90, 140 à 155, 93, 109, 110, 117, 118) d'asservissement de ladite pression également à l'amplitude de rotation du bras (29) autour du deuxième axe (8) par rapport au support (4) dans le premier et/ou le deuxième sens.

3. Suspension selon la revendication 1, caractérisée en ce que lesdits moyens (90, 140 à 155, 93, 109, 110, 117, 118) d'asservissement de ladite pression à la vitesse de rotation du bras (29) autour du deuxième axe (8) par rapport au support (4) dans le premier et/ou le deuxième sens constituent également des moyens d'asservissement de ladite pression à l'amplitude de rotation du bras (29) autour du deuxième axe (8) par rapport au support (4).

4. Suspension selon l'une quelconque des revendications 1 à 3, caractérisée en ce qu'elle comporte des moyens (124) pour limiter supérieurement ladite pression.

5. Suspension selon l'une quelconque des revendications 1 à 4, caractérisée en ce qu'elle comporte des moyens (125, 130, 142) pour rendre ladite pression insensible à des rotations lentes, ou de faible amplitude, ou de haute fréquence du bras (29) autour du deuxième axe (8) par rapport au support (4).

6. Suspension pour véhicule, du type comportant :

- un support (4) susceptible d'être solidarisé avec une ossature (2) du véhicule,

- un bras longitudinal (29),

- des moyens (36) de liaison d'un organe de roulement (3) avec le bras (29), définissant un premier axe transversal (37) de rotation de l'organe de roulement (3) par rapport au bras (29),

- des premiersmoyens (7, 16, 17, 22) de liaison du bras (29) avec le support (4), définissant un deuxième axe transversal (8) de rotation du bras (29) par rapport au support (4), le deuxième axe (8) étant parallèle au premier axe (37) et décalé longitudinalement par rapport à celui-ci,

- des seconds moyens (9, 49, 47) de liaison du bras (29) avec le support (4), définissant une position angulaire d'équilibre du bras (29) à la rotation autour du deuxième axe (8) par rapport au support (4), et autorisant élastiquement des mouvements de rotation du bras (29) autour du deuxième axe (8) par rapport au support (4) dans deux sens inverses à partir de ladite position angulaire d'équilibre,

- deux organes complémentaires de freinage par friction (82, 84),

- des moyens (80, 28) de solidarisation desdits organes (82, 84) à l'encontre d'une rotation autour du deuxième axe (8) respectivement par rapport au bras (29) et par rapport au support (4),

- des moyens (88) de mise en contact mutuel, sous pression, des premier et second organes (82, 84),

- des moyens (93, 109, 140 à 145) de captation de la vitesse de rotation du bras (29) autour du deuxième axe (8) par rapport au support (4) dans un premier sens pour délivrer un premier signal de valeur représentative de cette vitesse,

- des moyens (90, 142, 147) de pilotage des moyens (88) de mise en contact mutuel en fonction de la valeur dudit premier signal, pour moduler la valeur de la pression de mise en contact mutuel en fonction de la valeur dudit premier signal,

caractérisée en ce qu'elle comporte en outre des moyens (93, 110, 140 à 145) de captation de la vitesse de rotation du bras (29) autour du deuxième axe (8) par rapport au support (4) dans un deuxième sens inverse du premier sens, pour délivrer un deuxième signal de valeur représentative de cette vitesse, et en ce que lesdits moyens (90, 142, 147) de pilotage constituent également des moyens de pilotage des moyens (88) de mise en contact mutuel en fonction de la valeur dudit deuxième signal, pour moduler la valeur de la pression de mise en contact mutuel en fonction de la valeur dudit deuxième signal.

7. Suspension selon la revendication 6, caractérisée en ce qu'elle comporte des moyens (93, 142) pour moduler la valeur dudit premier et/ou dudit deuxième signal en fonction de la position angulaire au bras (29) par rapport au support (4).

8. Suspension selon l'une quelconque des revendications 6 et 7, caractérisée en ce que lesdits premier et deuxième signaux sont électriques.

9. Suspension selon la revendication 8, caractérisée en ce que les moyens de captation (93, 140 à 145) sont choisis parmi les types électro-mécanique, électromagnétique, opto-électronique et les moyens (90,142,147) de pilotage parmi les types électronique, électro-hydraulique, électro-mécanique.

10. Suspension selon l'une quelconque des revendications 6 et 7, caractérisée en ce que lesdits premier et deuxième signaux sont hydrauliques.

11. Suspension selon la revendication 10, caractérisée en ce que les moyens de captation (93,109, 110) et les moyens (90) de pilotage sont mécano-hydrauliques.

12. Suspension selon l'une quelconque des revendications 6 à 11, caractérisée en ce qu'elle comporte des moyens (124, 142) de filtration desdits premier et deuxième signaux, pour limiter supérieurement ladite pression.

13. Suspension selon l'une quelconque des revendications 6 à 12, caractérisée en ce qu'elle comporte des moyens (125, 130, 142) de filtration desdits premier et deuxième signaux, pour rendre ladite pression insensible à des rotations lentes, ou de faible amplitude, ou de haute fréquence du bras (29) autour du deuxième axe (8) par rapport au support (4).

14. Suspension pour véhicule, du type comportant :

- un support (4) susceptible d'être solidarisé avec une ossature (2) du véhicule,

- un bras longitudinal (29),

- des moyens (36) de liaison d'un organe de roulement (3) avec le bras (29), définissant un premier axe transversal (37) de rotation de l'organe de roulement (3) par rapport au bras (29),

- des premiersmoyens (7, 16, 17, 22) de liaison du bras (29) avec le support (4), définissant un deuxième axe transversal (8) de rotation du bras (29) par rapport au support (4), le deuxième axe (8) étant parallèle au premier axe (37) et décalé longitudinalement par rapport à celui-ci,

- des seconds moyens (9, 49, 47) de liaison du bras (29) avec le support (4), définissant une position angulaire d'équilibre du bras (29) à la rotation autour du deuxième axe (8) par rapport au support (4) et autorisant élastiquement des mouvements de rotation du bras (29) autour du deuxième axe (8) par rapport au support (4) dans deux sens inverses à partir de ladite position angulaire d'équilibre,

- deux organes complémentaires de freinage par friction (82, 84),

- des moyens (80, 28) de solidarisation desdits organes (82, 84) à l'encontre d'une rotation autour du deuxième axe (8) respectivement par rapport au bras (29) et par rapport au support (4),

- des moyens (88) formant vérin hydraulique de mise en contact mutuel, sous pression, des premier et second organes (82, 84),

- un réservoir (22, 123) de fluide hydraulique,

- des premiers moyens (109) de pompage de fluide dans le réservoir (22, 23) et de refoulement de fluide vers les moyens (88) formant vérin hydraulique,

- des moyens (124, 125) de retour de fluide depuis les moyens (88) formant vérin hydraulique vers le réservoir (22, 123), lesdits moyens de retour (124, 125) comportant des moyens (125) pour établir un débit de fuite calibré,

- des moyens (93) d'entraînement des premiers moyens (109) de pompage par rotation du bras (29) autour du deuxième axe (37) par rapport au support (4) de telle sorte que la rotation du bras (29) par rapport au support (4) dans un premier sens provoque un refoulement de fluide vers les moyens (88) formant vérin hydraulique et les moyens de retour (124,125) pour établir alors un amortissement asservi au moins à la vitesse de rotation du bras (29) par rapport au support et que la rotation du bras (29) par rapport au support (4) dans un deuxième sens opposé au premier sens provoque un pompage de fluide dans le réservoir (22, 123),

caractérisée en ce qu'elle comporte :

- des seconds moyens (110) de pompage de fluide dans le réservoir (22, 123) et de refoulement de fluide vers les moyens (88) formant vérin hydraulique,

- des moyens (93) d'entraînement des seconds moyens (110) de pompage, en opposition de phase avec les premiers moyens (109) de pompage, par rotation du bras (29) autour du deuxième axe (37) par rapport au support (4) de telle sorte que la rotation du bras (29) par rapport au support (4) dans le premier sens provoque un pompage de fluide dans le réservoir (22, 123) et que la rotation du bras (29) par rapport au support (4) dans le deuxième sens provoque un refoulement de fluide vers les moyens (88) formant vérin hydraulique et les moyens de retour (124, 125) pour établir alors un amortissement asservi au moins à la vitesse de rotation du bras (29) par rapport au support (4).

- des clapets anti-retour (117, 118) interposés respectivement entre chacun des premier et second moyens de pompage (109, 110) et les moyens (88) formant vérin hydraulique, lesdits clapets anti-retour (117, 118) autorisant un passage de fluide vers les moyens (88) formant vérin hydraulique.

15. Suspension selon la revendication 14, caractérisée en ce que les premier et second moyens (109, 110) de pompage comportent deux alésages (105, 106) et deux pistons (109, 110) à clapet (114) dont chacun est monté à coulissement dans un alésage (105, 106) respectif, en ce que les moyens (93) d'entraînement des premier et second moyens (109, 110) de pompage comportent une came (93), deux toucheaux de came (101, 102) dont chacun est solidaire d'un piston respectif (109, 110), et des moyens élastiques (111, 112) d'application des toucheaux de came (101, 102) contre la came (93), et en ce qu'il est prévu des moyens pour traduire une rotation du bras (29) autour du deuxième axe (8) par rapport au support (4) par une rotation identique des deux alésages (105, 106) autour du deuxième axe (8) par rapport à la came (93) et par des mouvement des pistons (109, 110) en opposition de phase.

16. Suspension selon la revendication 15, caractérisée en ce que la came (93) est symétrique par rapport à un plan (14) coïncidant avec un plan de symétrie entre les alésages (105, 106) et incluant le deuxième axe (8), dans ladite position d'équilibre.

17. Suspension selon la revendication 15, caractérisée en ce que la came (93) est dissymétrique par rapport à un plan (14) coïncidant avec un plan de symétrie entre les alésages (105, 106) et incluant le deuxième axe (8), dans ladite position d'équilibre.

18. Suspension selon l'une quelconque des revendications 15 à 17, caractérisée en ce que les pistons (109, 110) présentent des sections identiques.

19. Suspension selon l'une quelconque des revendications 15 à 17, caractérisée en ce que les pistons (109, 110) présentent des sections différentes.

20. Suspension selon l'une quelconque des revendications 15 à 19, caractérisée en ce que la came (93) présente une pente variable.

21. Suspension selon l'une quelconque des revendications 15 à 20, caractérisée en ce que les deux alésages (105, 106) sont solidaires du bras (29) et la came (93) est solidaire du support (4).

22. Suspension selon l'une quelconque des revendications 14 à 21, caractérisée en ce que les moyens (124, 125) de retour de fluide depuis les moyens (88) formant vérin hydraulique vers le réservoir (22, 123) comportent un clapet de surpression (124).

23. Suspension selon l'une quelconque des revendications 14 à 22, caractérisée en ce qu'elle comporte des moyens accumulateurs de pression (130) entre lesdits premier et second moyens de pompage (109, 110) d'une part, les moyens (88) formant vérin hydraulique d'autre part.

24. Suspension selon l'une quelconque des revendications 14 à 23, caractérisée en ce que le réservoir (22, 123) de fluide hydraulique comporte un carter (22) de liaison du bras (29) avec le support (4).

25. Suspension selon la revendication 24, caractérisée en ce que les organes complémentaires de freinage par friction (82, 84) et les moyens (88) formant vérin hydraulique sont localisés dans une partie inférieure du carter (22).

26. Suspension selon la revendication 25, caractérisée en ce qu'elle comporte des moyens (126) pour établir une circulation de fluide hydraulique dans le carter (22) dans l'entourage des organes complémentaires de freinage par friction (82, 84) et des moyens (88) formant vérin hydraulique lors des rotations du bras (29) autour du deuxième axe (8) par rapport au support (4).

27. Suspension selon l'une quelconque des revendications 25 et 26, caractérisée en ce que les premier et second moyens de pompage (109, 110) débouchent (131, 132) dans ladite partie inférieure du carter (22).

28. Suspension selon l'une quelconque des revendications 26 à 27, caractérisée en ce qu'un premier (82) desdits organes de freinage (82, 84) comporte au moins un secteur de disque de frein (82) perpendiculaire au deuxième axe (8), en ce que le second (84) desdits organes comporte au moins deux garnitures de freinage (84) perpendiculaires au deuxième axe (8) et juxtaposées au secteur de disque de frein (82), respectivement de part et d'autre de celui-ci, et en ce que les moyens formant vérin hydraulique (88) comportent au moins un cylindre (86) présentant un axe (87) parallèle au deuxième axe (8) et un piston (88) monté à coulissement dans le cylindre (86) pour solliciter les garnitures (84) contre le secteur de disque de frein (82) parallèlement au deuxième axe (8).

29. Suspension selon la revendication 28, caractérisée en ce que le disque de frein (82) est immobilisé à l'encontre d'une rotation autour du deuxième axe (8) par rapport au support (4) et en ce que les garnitures de freinage (84) et le cylindre (86) des moyens (88) formant vérin hydraulique sont immobilisés à l'encontre d'une rotation autour du deuxième axe (8) par rapport au bras (29).

FIG.1

0218509

FIG. 2

0218509

FIG_3

FIG.4

FIG_5

FIG_8

FIG_6

FIG_7

0218509

Numero de la demande

Office européen
des brevets

**RAPPORT DE RECHERCHE EUROPEENNE**

EP   86 40 2034

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 090 154  (EX-CELL-O)<br>* Figures 2-5,10,11; page 13, ligne 9 - page 16, ligne 29 * | 1 | B 62 D   55/112 |
| | --- | | |
| A | US-A-3 047 283  (KIVELL)<br>* En entier * | 1 | |
| | --- | | |
| A | US-A-3 521 527  (GIES et al.)<br>* En entier * | 1 | |
| | ----- | | |

DOMAINES TECHNIQUES
RECHERCHES (Int. Cl.4)

B 62 D
B 60 G
F 16 F

Le présent rapport de recherche a été établi pour toutes les revendications

| Lieu de la recherche | Date d'achèvement de la recherche | Examinateur |
|---|---|---|
| LA HAYE | 15-12-1986 | LINTZ C.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82